# EUROPEAN PATENT APPLICATION

(11) **EP 1 645 850 A2**
(43) Date of publication of application: **12.04.2006**
(21) Application number: 05254560.5
(22) Date of filing: 21.07.2005
(51) Int. Cl.: G01C 22/00

(54) **Pedometer**

(30) Priority: 18.09.2004 HK 04107216
(71) Applicant: Jetfly Technology Limited, Kowloon, Hong Kong (CN)
(72) Inventor: Chan, Shu Nam, Kwun Tong Kowloon, Hong Kong (CN)
(74) Representative: Roberts, Mark Peter

(57) **Abstract**

A pedometer attachable to a user firstly includes a magneto-electric sensor. An electric characteristic of he magneto-electric sensor is variable in accordance with a variance in magnetism the magneto-electric sensor senses from the earth's magnetic field. The pedometer further includes a detection circuit for detecting the variance in the characteristic of the magneto-electric sensor and a processor for counting steps traveled by the user dependent upon information about the variance in the characteristic of the magneto-electric sensor.

## Description

### BACKGROUND

### 1. Field of the Invention

The present invention relates to technologies for counting steps of a walker, or a runner over a period of time.

### 2. Background of the Invention

Recently, jogging or walking is frequently carried out so as to promote health, diet, etc. The number of steps a person walks in a day mostly judges the quantitative criterion of the motion. A pedometer is often used to measure the number of steps a person walks or jogs.

For example, a mechanical sensor attached to the waist of the user can be used to detect the vibration or motion of a user's body at the time of walking and further to detect his walking motion. However, such a conventional pedometer may not be accurate enough. In addition, this type of pedometer is generally placed at the waist of the user and therefore may not be convenient.

### OBJECT OF THE INVENTION

Therefore, it is an object of the present invention to provide a more accurate and/or a more convenient pedometer for counting the steps of a user, or at least provide the public with a useful choice.

### SUMMARY OF THE INVENTION

According to an aspect of present invention, a pedometer attachable to a user firstly includes a magneto-electric sensor. An electric characteristic of he magneto-electric sensor is variable in accordance with a variance in magnetism the magneto-electric sensor senses from the earth's magnetic field. The pedometer further includes a detection circuit for detecting the variance in the characteristic of the magneto-electric sensor and a processor for counting steps traveled by the user dependent upon information about the variance in the characteristic of the magneto-electric sensor.

According to another aspect of the present invention, a process for counting steps of a user includes:
providing a magneto-electric sensor;
detecting a variance in an electric characteristic of the magneto-electric
sensor due to variance in a position of the magneto-electric sensor
relative to the earth's magnetic field as a user moves; and
counting steps traveled by the user dependent upon information about the variance in the electric characteristic of the magneto-electric sensor.

Other aspects and advantages of the invention will become apparent from the following detailed description, taken in conjunction with the accompanying drawings, which description illustrates by way of example the principles of the invention.

### BRIEF DESCRIPTION OF THE DRAWINGS

Figure 1 illustrates the working principle of a pedometer according to the present invention;
Figure 2 is a diagram illustrating a first exemplary embodiment of the present invention;
Figure 3 is a chart illustrating a waveform of a signal useful in the embodiment of Figure 2;
Figure 4 is another chart illustrating another waveform of a signal useful in the embodiment of Figure 2; and
Figure 5 illustrates a Wheatstone bridge useful in a second exemplary embodiment of the present invention.

### DETAILED DESCRIPTION

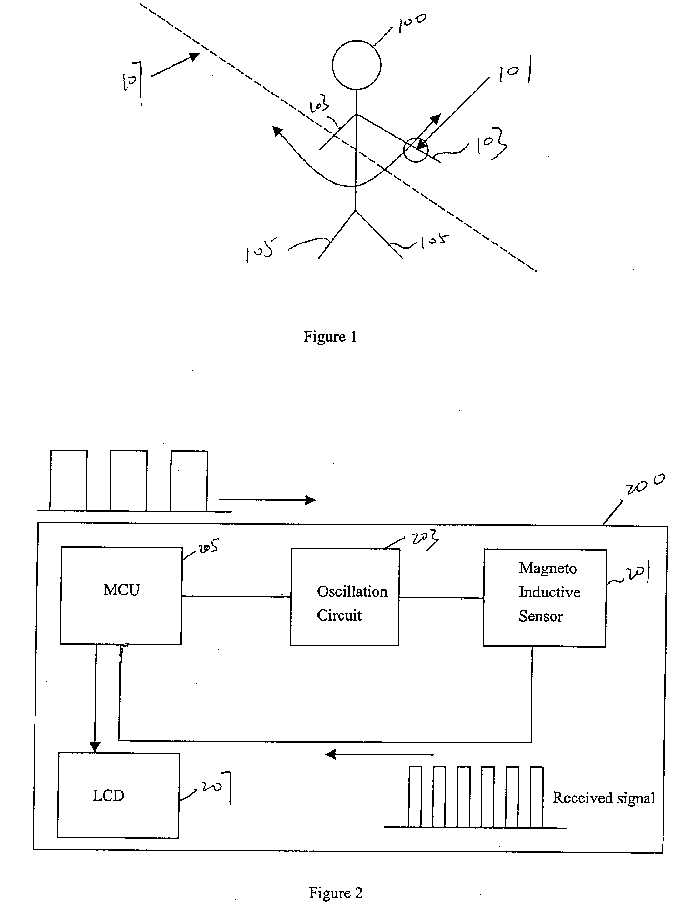

Figure 1 illustrates a watch-type pedometer 101 attachable to an arm 103 of a user 100 according to an exemplary embodiment of the present invention. As the user 100 moves, the user's arms 103 generally swing from backward to forward and from forward to backward, presumably at the same frequency as the user's steps. The exemplary pedometer 101 of the present invention counts the steps of the user as the user walks or runs by counting the number of the swings of the arm 103 based on the assumption that one swing of the arm 105 corresponds to one step of the leg 105.

The exemplary pedometer 101 according to the present invention uses a magneto-electric sensor embedded therein; the magneto-electric sensor has an electric characteristic variable in accordance with the magnetism it senses and extends along an axis (not shown), which is at least substantially in line with the arm 103 of the user 100 in the exemplary embodiment(s) of the invention. Since the direction of the Earth's magnetic field 107 barely changes during the movements of the user 100, as the arm 103 swings, an angle between the axis, along which the magneto-electric sensor extends, and the direction of the Earth's magnetic field 107 varies. As a result, the magneto-electric sensor senses a varying magnetism of the Earth's magnetic field as the arm 103 swings. Accordingly, the electric characteristic of the magneto-electric sensor varies. By ascertaining such variance in the electric characteristic of the magneto-electric sensor, the exemplary pedometer is capable of counting the number of the swings of the arm 103 and consequently the number of steps.

In Figure 2, an exemplar pedometer 200 according to a first embodiment of the present invention uses a magneto-inductive sensor 201 to detect the variance in the magnetism of the Earth's magnetic field it senses. As generally known in the field, the inductance of such magneto-inductive sensor 201 varies in accordance with the magnetism it senses. Therefore, by ascertaining the variance in the inductance of such a sensor 201, the movements of the arm 103 can be detected.

An oscillation circuit 203 is provided in the first embodiment for detecting the inductance of the magneto-inductive sensor 201 as generally understood in the field. The oscillation circuit 203 in turn outputs its detected signals to a processor 205 also embedded in the pedometer 200 for further processing. After processing, the result, for example the number of the steps counted, can be sent from the processor 205 to a display 207 for display.

Magneto-inductive sensors available from PNI Corporation, a California company, can be used in this exemplary embodiment. But it is understood that products from other companies may also be suitable so long as they exhibit similar functionalities specified above.

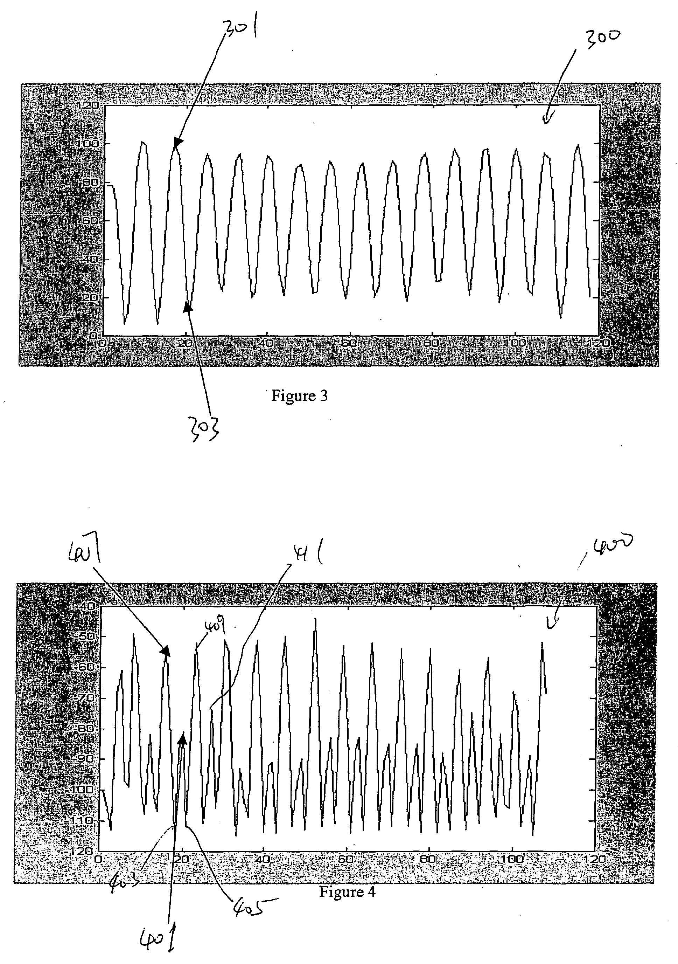

An exemplary waveform 300 of the output of the oscillation circuit 203 is shown in Figure 3. This exemplary waveform 300 represents a situation in which the arm 103 swings at a relatively small angle. In such a waveform, each peak 301 represents that the arm 103 has reached its most-backward position in the exemplary embodiment; each minimum 303 represents that the arm 103 has reached its most-forward position in the exemplary embodiment. Therefore, by counting the number of the peaks 301, the number of the swings of the arm and further the steps can be determined.

Another exemplary waveform 400 of the output of the oscillation circuit 203 is shown in Figure 4. This exemplary waveform 400 represents a situation in which the arm 103 swings at a relatively great angle. In such a waveform, some peaks 401 do not necessarily represent that the arm 103 has reached its most-backward position. Instead, peak 401 occurs when the arm 103 is around its most-forward position. Such a variance in the waveform 400 occurs for the reason that as the arm 103 swings at a relatively great angle, the arm 103 may pass a position in which the sensor senses a minimum magnetism and swing further forward. The arm 103, as well as the pedometer 200, will pass this position for the second time when the arm swings backward from its most-forward position. This is reflected in the waveform 400 by two minimums 403, 405 during one full circle of the swing of the arm 103.

To solve this issue, in the exemplary embodiment, the values of three successive peaks 407, 401, 409 are stored in a buffer (not shown) and are averaged to determine whether the peak 411 represents a most-backward position of the arm. If the average exceeds a preset threshold, such a peak 409 represents a most-backward position of the arm 103 and the processor determines that a swing of the arm 103 or a step occurs. If such an average is below the threshold, for example, in the case of peaks 401, 409, 411, the processor determines that peak 411 does not represent a most-backward position and that therefore a swing of the arm does not occur.

The preset threshold can be calculated by firstly averaging the values of a predetermined number of peaks and then multiplying the average by a predetermined constant, for example, within a range of 0.6-1.1.3. Alternatively, the present threshold can be simply calculated by multiplying the value of peak 407, which represents a real most-backward position of the arm, by a predetermined constant, for example, within a range of 0.3-0.6.

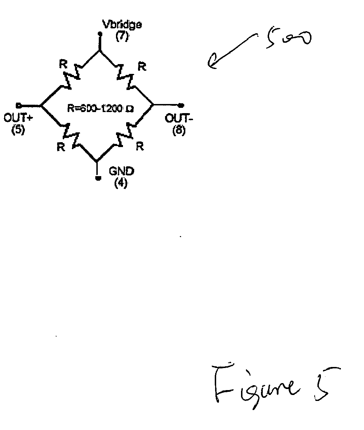

In a second exemplary embodiment of the present invention (not shown), a magneto-resistive sensor (not shown) replaces the magneto-inductive sensor 201 in the first embodiment. The resistance of such magneto-resistive sensor may vary in accordance with the magnetism it sensed, which is in accordance with the angle between the axis of the magneto-resistive sensor and the direction of the Earth's magnetic field. Correspondingly, a Wheatstone bridge 500 as shown in Figure 5 replaces the oscillation circuit 203 in the first embodiment to detect the variance in the resistance of the magnetic-resistive sensor, as generally understood.

Alternatives can be made to the exemplary embodiment. For example, various types of magnetic-electric sensor can be sued. In addition, in the exemplary embodiment, various detection circuits can be used to detect the inductance or the resistance of the sensor as generally understood in the art.

## Claims

1. A pedometer attachable to a user, comprising
a magneto-electric sensor, wherein an electric characteristic of the magneto-electric sensor is variable in accordance with a variance in magnetism the magneto-electric sensor senses from the earth's magnetic field;
a detection circuit for detecting the variance in the electric characteristic of the magneto-electric sensor; and
a processor for counting steps traveled by the user dependent upon information about the variance in the electric characteristic of the magneto-electric sensor.

2. The pedometer of claim 1, wherein the magneto-electric sensor extends along an axis, and wherein the electric characteristic of the magneto-electric sensor varies in accordance with the variance in an angle between the axis and a direction of the earth's magnetic field.

3. The pedometer of claim 1 or 2, wherein the magneto-electric sensor includes a magneto-inductive sensor having a variable inductance characteristic in accordance with the variance in the angle between the axis and a direction of the earth's magnetic field.

4. The pedometer of claim 3, wherein the detection circuit includes an oscillation circuit for detecting the inductance of the magneto-inductive sensor.

5. The pedometer of any one of the preceding claims, wherein the magneto-electric sensor includes a magneto-resistive sensor having a variable resistance characteristic in accordance with the variance in the angle between the axis and a direction of the earth's magnetic field.

6. The pedometer of claim 5, wherein the detection circuit detects the resistance of the magneto-resistive sensor.

7. The pedometer of claim 6, wherein the detection circuit includes a Wheatstone bridge.

8. The pedometer of any one of the preceding claims, wherein the pedometer is attachable to an arm of the user.

9. The pedometer of any one of the preceding claims, further comprising an output in electrical connection with the processor for displaying a result of the counting.

10. A process for counting steps of a user, comprising:
providing a magneto-electric sensor;
detecting a variance in an electric characteristic of the magneto-electric sensor due to variance in a position of the magneto-electric sensor relative to the earth's magnetic field as a user moves; and
counting steps traveled by the user dependent upon information about the variance in the electric characteristic of the magneto-electric sensor.

11. The process of claim 10, wherein the magneto-electric sensor extends along an axis, and wherein the electric characteristic of the magneto-electric sensor varies in accordance with the variance in an angle between the axis and a direction of the earth's magnetic field.

12. The process of claim 10 or 11, wherein the magneto-electric sensor includes a magneto-inductive sensor having a variable inductance characteristic in accordance with the variance in the angle between the axis and a direction of the earth's magnetic field.

13. The process of claim 12, wherein detection of the variance in the inductance of the magneto-inductive sensor is conducted by using an oscillation circuit.

14. The process of any one of claims 10 to 13, wherein the magneto-electric sensor includes a magneto-resistive sensor having a variable characteristic in accordance with the variance in the angle between the axis and a direction of the earth's magnetic field.

15. The process of Claim 14, wherein detection of the variance in the resistance of the magneto-resistive sensor is conducted by using a Wheatstone bridge.

16. The process of any one of claims 10 to 15, further comprising
attaching the magneto-electric sensor to an arm of the user; and
varying said position relative to the Earth's magnetic field by swinging the arm.

17. The process of any one of claims 10 to 16, further comprising
obtaining a waveform reflecting the variance in the electric characteristic of the magneto-electric sensor; and
counting the steps by counting a number of the peaks of the waveform over a predetermined period.

18. The process of claim 17, further comprising
storing values of a first predetermined number of consecutive peaks;
calculating an average of the values of the predetermined number of peaks; and
comparing the average value with a preset threshold value to ascertain whether a step occurs.

19. The process of Claim 18, wherein the preset threshold is determined dependent upon an average value of a second predetermined number of peaks.
